# EUROPÄISCHE PATENTANMELDUNG

(11) **EP 1 460 340 A1**
(43) Veröffentlichungstag der Anmeldung: **22.09.2004**
(21) Anmeldenummer: 03006467.9
(22) Anmeldetag: 21.03.2003
(51) Int. Cl.: F23R 3/28, F23R 3/00, F02C 7/22

(54) **Gasturbine**

(71) Anmelder: SIEMENS AKTIENGESELLSCHAFT, 80333 München (DE)
(72) Erfinder: Tiemann, Peter, 58452 Witten (DE)

(57) **Zusammenfassung**

Eine Gasturbine (1) mit einer Brennkammer (4), an der eine Anzahl von Brennern (10) angeordnet sind, in der zur Erzeugung eines Arbeitsmediums (M) ein zugeführter Brennstoff (B) mit zugeführter Verbrennungsluft (V) zur Reaktion gebracht wird, soll für eine Vermischung von Brennstoff (B) und Verbrennungsluft (V) in einem den Brennern (10) entgegen der Strömungsrichtung des Brennstoff-/Verbrennungsluft-Gemisches (B, V) vorgelagerten Bereich ausgelegt sein. Dazu sind der Gasturbine (1) erfindungsgemäß eine oder eine Anzahl von Ringleitungen (24) für die Brennstoffzufuhr der Brenner (10) zugeordnet, die sich kreisförmig um die Längsachse der Gasturbine (1) erstreckt.

## Beschreibung

Die Erfindung bezieht sich auf eine Gasturbine mit einer Brennkammer, in der zur Erzeugung eines Arbeitsmediums ein zugeführter Brennstoff mit zugeführter Verbrennungsluft zur Reaktion gebracht wird, wobei an der Brennkammer in einer Umfangsrichtung eine Anzahl von Brennern verteilt angeordnet ist.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Dazu wird ein Brennstoff in einer Anzahl von Brennern verbrannt, wobei von einem Luftverdichter verdichtete Verbrennungsluft zugeführt wird. Durch die Verbrennung des Brennstoffes wird ein unter hohem Druck stehendes Arbeitsmedium mit einer hohen Temperatur erzeugt. Dieses Arbeitsmedium wird in eine dem jeweiligen Brenner nachgeschaltete Turbineneinheit geführt, wo es sich arbeitsleistend entspannt. Dabei kann jedem Brenner eine separate Brennkammer, eine so genannte "Can-Transition-Brennkammer", zugeordnet sein, wobei das aus den Brennkammern abströmende Arbeitsmedium vor oder in der Turbineneinheit zusammengeführt sein kann. Alternativ kann die Gasturbine aber auch in einer so genannten Ringbrennkammer-Bauweise ausgeführt sein, bei der eine Mehrzahl, insbesondere alle, der Brenner in eine gemeinsame, üblicherweise ringförmige, Brennkammer münden.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Temperatur erreichen, mit dem das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem Medium ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Ausgestaltung mit besonders hitzebeständigen Materialien und eine Kühlung der betroffenen Komponenten, insbesondere der Brennkammer, nötig. Die Brennkammerwand ist dazu in der Regel auf ihrer Innenseite mit Hitzeschildelementen ausgekleidet, die mit besonders hitzebeständigen Schutzschichten versehen werden können, und die durch die eigentliche Brennkammerwand hindurch gekühlt werden. Dazu wird in der Regel ein auch als "Prallkühlung" bezeichnetes Kühlverfahren eingesetzt. Bei der Prallkühlung wird ein Kühlmittel, in der Regel Kühlluft, durch eine Vielzahl von Bohrungen in der Brennkammerwand den Hitzeschildelementen zugeführt, so dass das Kühlmittel im Wesentlichen senkrecht auf ihre der Brennkammerwand zugewandte, außen liegende Fläche prallt. Das durch den Kühlprozess aufgeheizte Kühlmittel wird anschließend aus dem Innenraum, den die Brennkammerwand mit den Hitzeschildelementen bildet, abgeführt und kann anschließend den Brennern und damit dem Verbrennungsprozess als Verbrennungsluft zugeführt werden.

Weiterhin wird bei der Gestaltung von Gasturbinen versucht beim Verbrennungsprozess im Brennkammerinnenraum möglichst hohe Leistungsdichten zu erhalten und die bei der Verbrennung entstehenden Stickoxidemissionen möglichst gering zu halten. Dazu wird ein möglichst hoher Vermischungsgrad von Brenngas und zugeführter Luft angestrebt, um ein stabiles Brennverhalten in der Brennkammer gewährleisten zu können, das insbesondere auch die bei der Verbrennung entstehenden Brennkammerschwingungen begrenzt. Daher ist man bestrebt, den Vermischungsvorgang von Brenngas und Luft möglichst frühzeitig bzw. vor dem Eintritt des Gemisches in die Brennkammer stattfinden zu lassen, um so den Vermischungsgrad für die sich in Strömungsrichtung des Gemisches anschließende Verbrennung zu steigern. Eine derartige Vermischung von Brenngas und zugeführter Luft vor den Brennern erfolgte bisher nur bei den Brennern von Can-Transition-Anwendungen.

Problematisch bei einer Vorabvermischung des Brenngases mit Verbrennungsluft ist, dass Leckagen bei der Zuleitung des Verbrennungsgemisches sowie ein frühzeitiges Entzünden dieses Gemisches vor dem Einströmen in die Brennkammer zu vermeiden ist. Eine Vermischung in vergleichsweise geringer Entfernung von den Brennern, also im Bereich der Verbrennungsluftzuführung, die diesen Vorgaben gerecht werden würde, ist jedoch mechanisch aufgrund der extremen äußeren Einflüsse in diesen Bereichen bisher nicht zuverlässig realisierbar. Die Realisierung für die für eine frühzeitige Vermischung nötigen Vorrichtungen wie beispielsweise eine Verrohrung der Zuführleitungen ist insbesondere aufgrund der großen Temperaturunterschiede und der Strömungsturbulenzen im Einströmbereich der Verbrennungsluftzufuhr der Brenner, die zu Vibrationen und thermischen Dehnungseffekten führen können bisher nicht möglich. Die Vermischung des Brenngases und der zugeführten Luft ist bei Ringbrennkammern daher bisher auf Bereiche innerhalb der Brennkammer oder auf Bereiche, die sich unmittelbar am Einströmbereich der Brenner befinden, begrenzt.

Der Erfindung liegt daher die Aufgabe zugrunde, eine Gasturbine der oben genannten Art anzugeben, die für eine Vermischung von zugeführtem Brennstoff und zugeführter Verbrennungsluft in einem den Brennern entgegen der Strömungsrichtung des Brennstoff-/Verbrennungsluft-Gemisches vorgelagerten Bereich besonders geeignet ist.

Diese Aufgabe wird erfindungsgemäß gelöst, indem die Brenner über eine Anzahl von gemeinsamen, sich in Umfangsrichtung erstreckende Ringleitungen mit Brennstoff bespeisbar sind.

Die Erfindung geht dabei von der Überlegung aus, dass bei einer Vermischung des Brennstoffs mit Verbrennungsluft unmittelbar von den Brennern einerseits eine weitgehend homogene Bespeisung der Brenner mit Brennstoff sichergestellt sein sollte. Andererseits sollte die Brennstoffzuführung für eine besonders hohe Stabilität ausgelegt sein, um nicht durch Turbulenzen und Druckschwankungen der Verbrennungsluftzufuhr beschädigt zu werden oder selbst zu schwingen zu beginnen. Für diese beiden Anforderungen ist eine die Gasturbinenachse in Umfangsrichtung umlaufende ringförmige Leitung vorgesehen. Durch die Formgebung in der Art eines geschlossenen Ringes ist dabei eine besonders hohe intrinsische Stabilität hinsichtlich möglicher Schwingungen und Turbulenzen erreichbar.

Es kann dabei lediglich eine einzige, den Brennern gemeinsame Ringleitung vorgesehen sein. Alternativ ist aber auch die Anbringung einer Mehrzahl von derartigen Ringleitungen denkbar, die insbesondere in Längsrichtung der Gasturbine gesehen hintereinander angeordnet sein können. Je nach Auslegung der Brenner kann auch eine Bespeisung jedes Brenners über zwei Ringleitungen vorgesehen sein.

Damit die jeweilige Ringleitung durch thermische Dehnungseffekte ihrer Befestigungsvorrichtungen nicht beschädigt wird, ist vorzugsweise eine flexible Aufhängung der Ringleitung an der Gasturbine vorgesehen. Dazu ist die jeweilige Ringleitung vorteilhafterweise über biegbare Befestigungsvorrichtungen am Gasturbinengehäuse befestigt. Bei möglicherweise entstehenden Thermospannungen der Befestigungsvorrichtungen werden diese somit nicht unmittelbar an die Ringleitung übertragen, sondern durch die Biegung der Befestigungsvorrichtungen neutralisiert.

Um die Ringleitung besonders weitgehend vor eventuell entstehenden Turbulenzen der Verbrennungsluftzufuhr geschützt zu halten, ist die jeweilige Ringleitung zweckmäßigerweise in einem strömungsarmen Bereich der Verbrennungsluftzufuhr der Brenner angeordnet. Der Ringleitung kann dabei insbesondere auch eine an der Brennkammerschale angeordnete Strömungsschutzrippe zugeordnet sein.

Um den Brennstoff über die Ringleitung den Brennern der Gasturbine zuzuführen, verfügt die Ringleitung vorzugsweise über eine Anzahl der Brennkammerwand zugewandter Auslassbohrungen, über die der Brennstoff an die Brennkammerwand führbar ist.

Damit der Brennstoff über die Ringleitung den Brennern auch dann zugeführt werden kann, wenn sich die Ringleitung in einem Mindestabstand von der Brennkammer bzw. der Brennkammerwand befindet, ist vorteilhafterweise jedem Brenner brennstoffseitig ein mit der Ringleitung verbundenes Zuführungsrohr zugeordnet, das von der Ringleitung zur Brennkammerwand führt. Der Brennstoff ist so über die an die Ringleitung angeschlossene Zuführungsrohre verteilbar.

Für eine Bespeisung der Brenner mit Brennstoff-/Verbrennungsluft-Gemisch ist die Brennkammerwand vorteilhafterweise mit einer Innenauskleidung versehen, die mit dieser zweckmäßigerweise einen in Strömungsrichtung des Brennstoff-/Verbrennungsluft-Gemisches den Brennern vorgelagerten Zwischenraum ausbildet, über den das Brennstoff-/Verbrennungsluft-Gemisch den Brennern zuführbar ist. Dabei strömt das Brennstoff-/Verbrennungsluft-Gemisch bedingt durch die herrschenden Druckund Strömungsverhältnisse im Zwischenraum von Brennkammerwand und Innenauskleidung entlang der Brennkammerwand zu den Brennern. Der Zwischenraum kann dabei vorzugsweise als Mischkammer zur Vermischung von Brennstoff und Verbrennungsluft dienen.

Um den Brennstoff dem Zwischenraum zwischen Brennkammerwand und Innenauskleidung der Gasturbine geeignet zuzuführen und ihn dort mit Verbrennungsluft zu vermischen, verfügt die Brennkammerwand vorzugsweise über eine Anzahl von Bohrungen, die jeweils einer Bohrung einer Ringleitung oder dem Zuführrohr einer Ringleitung zugeordnet sind. Die Bohrungen können dabei insbesondere als Stichrohre durch die Diffusorrippen ausgeführt sein. Über diese Bohrungen strömt der Brennstoff jetartig in den Zwischenraum von Brennkammerwand und Innenauskleidung, da die Strömungsbewegung des Brennstoff-/Verbrennungsluft-Gemisch im Zwischenraum einen Unterdruck mit einer Sogwirkung an den Bohrungen erzeugt. Durch diese Sogwirkung wird sowohl Brennstoff aus den Auslassbohrungen bzw. aus den Zuführrohren der Ringleitung als auch Luft aus dem Umgebungsbereich der Bohrungen in die Bohrungen und damit in den Zwischenraum von Brennkammerwand und Innenauskleidung hineingesogen. Dadurch vermischt sich der Brennstoff durch intensive Verwirbelungen bereits beim Einströmen in die Bohrungen mit Verbrennungsluft und wird im weiteren Strömungsverlauf der Bohrung und dem Zwischenraum von Brennkammerwand und Innenauskleidung durch die Strömungsbewegung noch weiter miteinander vermischt.

Um das zuverlässige Einströmen von Brennstoff in die Bohrungen der Brennkammerwand auch dann zu ermöglichen, wenn sich die Ringleitung gegenüber der Brennkammer bzw. der Brennkammerwand beim Betrieb der Gasturbine durch thermische Dehnungseffekte verschiebt, sind die Bohrungen in der Brennkammerwand vorteilhafterweise derart dimensioniert, dass bei einer Verschiebung in Längsrichtung der Gasturbine zwischen Brennkammer und Ringleitung bis zu einem vorgegebenen Maximalwert die Bohrungen der Ringleitung oder die Zuführrohre der Ringleitung zweckmäßigerweise im Bereich des Querschnittes der Bohrungen der Brennkammerwand verbleiben. Bei ausreichend großen Bohrungen in der Brennkammerwand wird der Brennstoff so auch dann in die Bohrungen hineingesogen, wenn Bohrungen und Auslassbohrungen bzw. Zuführrohre der Ringleitung nicht exakt aneinander positioniert sind.

Damit die Ringleitung mit Brennstoff bespeist werden kann, ist diese vorteilhafterweise mit einer Brennstoffzuführleitung verbunden.

Um die Brennstoffzuführleitung mit der angeschlossenen Ringleitung bei einer Verschiebung von Brennkammer und Ringleitung zueinander zugleich bewegbar und gasdicht an der Gasturbine zu befestigen, ist die Brennstoffzuführleitungen vorzugsweise über eine zum Gasturbinengehäuse gasdichte Kompensationsvorrichtung an diesem in Längsrichtung der Gasturbine bewegbar befestigt.

Die Vorteile der Erfindung bestehen insbesondere darin, dass durch die den Brennern gemeinsame, ringförmige Brennstoffzuleitung eine hohe Stabilität des Leitungssystems erreichbar ist, so dass trotz auftretender Turbulenzen oder Schwingungen zuverlässig eine Vermischung des Brennstoffs mit Verbrennungsluft unmittelbar vor dem Eintritt in die Brenner erfolgen kann. Dabei ist ein guter Vermischungsgrad von Brennstoff und Verbrennungsluft erreichbar, der eine stabile Verbrennung in der Brennkammer ermöglicht, die sich minimierend auf Stickoxidentwicklung und Schwingungen der Brennkammer auswirkt. Ein weiterer Vorteil der oben beschriebenen Bespeisungsvorrichtung der Brenner mit einem Brennstoff-/Verbrennungsluft-Gemisch ist, dass diese sowohl für die starken Strömungsturbulenzen der Verbrennungsluftzufuhr als auch für die großen Temperaturdifferenzen in der Gasturbine ausgelegt sind. Dazu trägt insbesondere die flexible Befestigung und Lagerung der Ringleitung durch biegbare Befestigungsvorrichtungen als auch die Befestigung der Versorgungsleitung über eine Kompensationsvorrichtung bei. Außerdem ist über die Kombination von Bohrungen in der Brennkammerwand mit zugeordneten Auslassbohrungen bzw. Zuführrohren der Ringleitung eine hinsichtlich der thermisch bedingten Verschiebung von Brennkammer und Ringleitung unabhängige Bespeisung der Brenner möglich, die zugleich eine frühzeitige Vermischung von Brennstoff und Verbrennungsluft gewährleistet. Ein weiterer Vorteil besteht in der zentralen Versorgungsmöglichkeit der Brenner über Brennstoffzuführleitungen, mit der sämtliche Brenner bespeisbar sind.

Ein Ausführungsbeispiel der Erfindung wird anhand einer Zeichnung näher erläutert. Darin zeigen:
- FIG 1: einen Halbschnitt durch eine Gasturbine, und
- FIG 2: im Schnitt einen Ausschnitt einer Gasturbine nach FIG 1.

Gleiche Teile sind beiden Figuren mit den selben Bezugszeichen versehen.

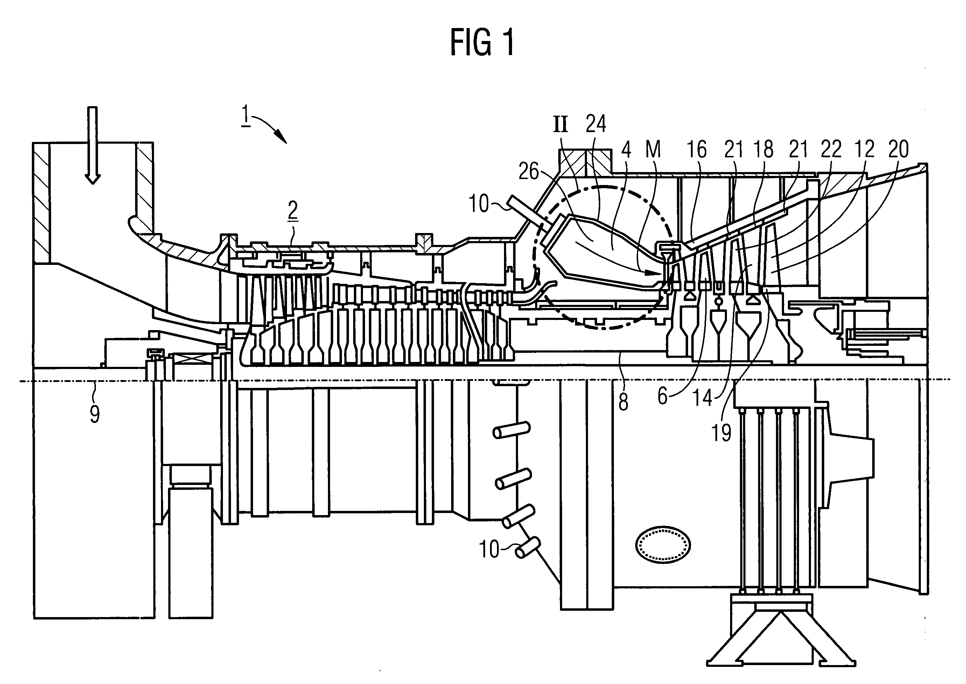

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs B bestückt.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heizgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1500 °C ausgelegt. Sie ist weiterhin an ihrer Brennkammerwand 24 mit einer Innenwandauskleidung 26 mit nicht näher dargestellten Hitzeschildelementen versehen.

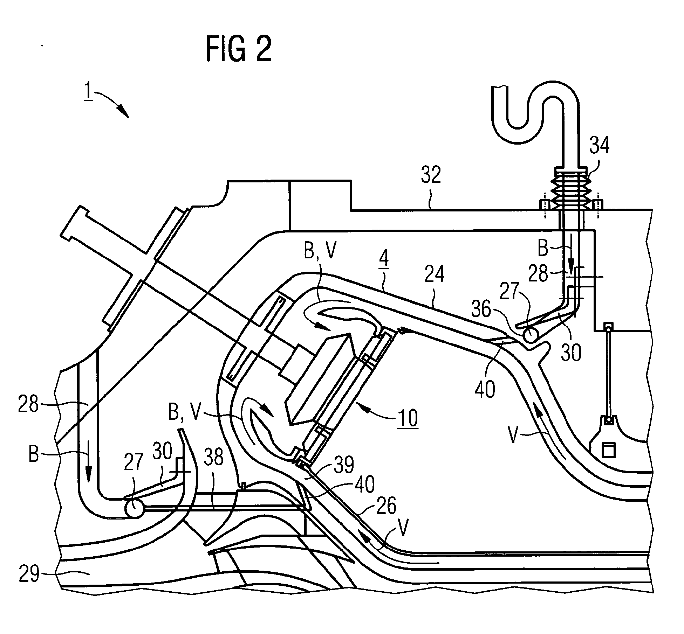

Um die Bespeisung der Brenner 10 mit Brennstoff B und Verbrennungsluft V näher zu erläutern ist, in FIG 2 ein Ausschnitt der Gasturbine 1 im Schnitt dargestellt, aus der sich die Brennstoff- und Verbrennungsluftzufuhr erkennen lässt.

Die Brenner 10 werden dazu im Ausführungsbeispiel über zwei Ringleitungen 27 gemeinsam mit Brennstoff B versorgt, die sich im Bereich der Verbrennungsluftzufuhr befinden und sich kreisförmig um die Längs- oder Mittelachse 9 der Gasturbine 1 erstrecken. Um die Ringleitungen 27 zentral mit Brennstoff B bespeisen zu können, sind diese an eine Brennstoffzuführleitung 28 angeschlossen. Die Ringleitungen 27 sind weiterhin derart positioniert und befestigt, dass möglichst keine Schäden durch Turbulenzen in Folge der Verbrennungsluftzufuhr auftreten. Dazu ist die in FIG 2 untere Ringleitung 27 in einem strömungsarmen Bereich am Diffusor 29 der Luftzufuhr positioniert, während sich die obere Ringleitung 27 unmittelbar an der Außenwand der Brennkammerwand 24 befindet. Die Ringleitungen 27 sind weiterhin über biegbare Befestigungsvorrichtungen 30, im Ausführungsbeispiel elastisch gehaltene Arme, am Gasturbinengehäuse 32 befestigt, so dass bei thermisch bedingten Dehnungseffekten dieser oder der Ringleitung 27 die Ringleitung 27 nicht beschädigt wird. Um die Brennstoffzuführleitungen 28 für Verschiebungen der Ringleitungen 27 flexibel positioniert zu halten, sind sie über eine gasdichte und bewegbare Kompensationsvorrichtung 34 am Gasturbinengehäuse 32 befestigt, wie es exemplarisch für die obere Ringleitung 24 in FIG 2 dargestellt ist.

Die Verteilung des Brennstoffs B an die Brenner 10 erfolgt bei der oberen Ringleitung 27 über Auslassbohrungen 36, die der Brennkammerwand 24 zugewandt sind. Die Verteilung des Brennstoffs B der unteren Ringleitung 24 erfolgt dagegen über Zuführrohre 38, die durch den Diffusor 29 bis zur Brennkammerwand 24 verlaufen, um die Strecke zwischen Ringleitung 27 und Brennkammerwand 24 zu überbrücken.

Um den Brennstoff B in den Zwischenraum 39 zwischen Brennkammerwand 24 und der Innenwandauskleidung 26 zu führen, der in Strömungsrichtung des Brennstoff-/Verbrennungsluft-Gemisches B, V den Brennern 10 vorgelagert ist, sind an der Brennkammerwand 24 eine Anzahl von Bohrungen 40 angeordnet, die entweder den Zuführrohren 38 oder den Auslassbohrungen 36 der Ringleitungen 24 zugeordnet sind. Der Brennstoff B wird bei der Zuführung jetartig durch den durch die Strömungsbewegung des Brennstoff-/Verbrennungsluft-Gemisches B, V im Zwischenraum von Brennkammerwand 24 und Innenwandauskleidung 26 entstehenden Unterdruck in die Bohrungen 40 hineingesogen, wobei durch die Sogwirkung ebenfalls Luft in die Bohrungen 40 gelangt, die sich mit dem Brennstoff B vermischt und so das Brennstoff-/Verbrennungsluft-Gemisch B, V bildet. Dieses wird über den Zwischenraum von Brennkammerwand 24 und Innenwandauskleidung 26 den Brennern 10 zugeführt, wobei sich dieses im Zwischenraum 39 durch seine Strömungsbewegung noch weiter vermischt. Um auch bei einer Verschiebung der Brennkammer 4 bzw. der Brennkammerwand 24 zu den Ringleitungen 27 eine Einspeisung in die Bohrungen 40 der Brennkammerwand 24 gewährleisten zu können, sind die Bohrungen 40 größer als die Auslassbohrungen 36 bzw. als der Querschnitt der Zuführrohre 38 dimensioniert, so dass bei einer Verschiebung die Zuführrohre bzw. die Auslassbohrungen 36 im Bereich des Querschnittes der Bohrungen 40 verbleiben.

## Patentansprüche

1. Gasturbine (1) mit einer Brennkammer (4), an der in einer Umfangsrichtung eine Anzahl von Brennern (10) verteilt angeordnet ist, die über eine gemeinsame, sich in Umfangsrichtung erstreckende Ringleitung (27) mit Brennstoff (B) bespeisbar sind.

2. Gasturbine (1) nach Anspruch 1, deren Ringleitung (27) über eine Anzahl von biegbaren Befestigungsvorrichtungen (30) am Gasturbinengehäuse (32) befestigt ist.

3. Gasturbine (1) nach Anspruch 1 oder 2, deren Ringleitung (27) in einem strömungsarmen Bereich der Verbrennungsluftzufuhr der Brenner (10) angeordnet ist.

4. Gasturbine (1) nach einem der Ansprüche 1 bis 3, deren Ringleitung (27) ausgangsseitig mit einer Anzahl der Brennkammerwand (24) zugewandter Auslassbohrungen (36) verbunden ist.

5. Gasturbine (1) nach einem der Ansprüche 1 bis 4, bei der jedem Brenner (10) brennstoffseitig ein mit der Ringleitung (27) verbundenes Zuführungsrohr (38) zugeordnet ist, das von der Ringleitung (27) zur Brennkammerwand (24) führt.

6. Gasturbine (1) nach einem der Ansprüche 1 bis 5, deren Brennkammerwand (24) mit einer Innenwandauskleidung (26) versehen ist, die mit dieser einen in Strömungsrichtung des Brennstoff-/Verbrennungsluft-Gemisches (B, V) den Brennern (10) vorgelagerten Zwischenraum ausbildet, über den das Brennstoff-/Verbrennungsluft-Gemisch (B, V) den Brennern (10) zuführbar ist.

7. Gasturbine (1) nach einem der Ansprüche 1 bis 6, deren Brennkammerwand (24) über eine Anzahl von Bohrungen (40) verfügt, die jeweils einer Auslassbohrung (36) oder einem Zuführrohr (38) der Ringleitung (27) zugeordnet sind.

8. Gasturbine (1) nach Annspruch 7, deren Bohrungen (40) in der Brennkammerwand (24) in ihrer Länge derart dimensioniert sind, dass bei einer axialen Verschiebung zwischen Brennkammer (4) und Ringleitung (27) bis zu einem vorgegebenen Maximalwert die Auslassbohrungen (36) der Ringleitung (24) oder die Zuführrohre (38) der Ringleitung (27) im Bereich des Querschnittes der Bohrungen (40) der Brennkammerwand (24) verbleiben.

9. Gasturbine (1) nach einem der Ansprüche 1 bis 8, deren Ringleitung (27) mit einer Brennstoffzuführleitung (28) verbunden ist.

10. Gasturbine (1) nach Anspruch 9, deren Brennstoffzuführleitung (28) über eine zum Gasturbinengehäuse (32) gasdichte Kompensationsvorrichtung (34) an diesem in Längsrichtung bewegbar befestigt ist.
